# EUROPÄISCHE PATENTSCHRIFT

(11) **EP 1 259 699 B1**
(45) Veröffentlichungstag und Bekanntmachung des Hinweises auf die Patenterteilung: **11.05.2005**
(21) Anmeldenummer: 01913715.7
(22) Anmeldetag: 24.02.2001
(51) Int. Cl.: E21B 10/44, B28D 1/14, B23B 51/02

(54) **GESTEINSBOHRER**
ROCK DRILL
PERFORATRICE DE ROCHES

(30) Priorität: 02.03.2000 DE 10009732
(43) Veröffentlichungstag der Anmeldung: 27.11.2002
(73) Patentinhaber: ROBERT BOSCH GMBH, 70442 Stuttgart (DE)
(72) Erfinder: FUSS, Mathias, 70771 Leinfelden-Echterdingen (DE)
(74) Vertreter: Patentanwälte Eisele, Otten, Roth & Dobler
(86) Internationale Anmeldenummer: PCT/DE2001/000719
(87) Internationale Veröffentlichungsnummer: WO 2001/065048

(56) Entgegenhaltungen:
- DE-A- 4 407 119
- DE-A- 4 419 641
- DE-A- 19 707 115
- DE-A- 19 724 373
- DE-A- 19 753 731
- DE-A- 19 859 885
- FR-A- 2 779 366
- US-A- 2 673 716

## Beschreibung

Die Erfindung betrifft einen Gesteinsbohrer nach dem Oberbegriff des Anspruchs 1.

### Stand der Technik:

Herkömmliche Gesteinsbohrer bestehen aus einem Bohrerschaft sowie einem Bohrerkopf, in welchem ein in Seitenansicht, sich über den gesamten Bohrer-Nenndurchmesser erstreckendes, dachförmiges Hartmetall-Schneidelement eingesetzt ist (siehe zum Beispiel DE 29 12 394 A1). Neben dieser sogenannten Hauptschneidplatte können auch, ebenfalls dachförmig angeordnete Nebenschneidplatten angeordnet sein, die zum Beispiel kreuzförmig, das heißt unter Einschluß eines rechten Winkels oder auch x-förmig (zum Beispiel EP 0 657 617 A1) angeordnet sein können. Der Bohrerkopf weist axial verlaufende schlitzförmige Vertiefungen auf, in welchem derartige Schneidplatten eingesetzt und eingelötet werden.

Um eine ausreichende Standfestigkeit der Hartmetallplatten zu erzielen, müssen diese eine gewisse Mindestdicke oder Mindeststärke aufweisen, was einen entsprechend breiten Aufnahmeschlitz für die Hartmetallplatten erfordert. Ein solcher, sich über den gesamten Durchmesser und gegebenenfalls quer hierzu erstreckender Aufnahmeschlitz für eine solche Hartmetall-Schneidplatte mit Haupt- und Nebenschneiden schwächt jedoch die zur Verfügung stehende Wandstärke zur Abstützung der jeweiligen Haupt- und/oder Nebenschneiden, was insbesondere bei Bohrwerkzeugen mit kleinerem Nenndurchmesser, zum Beispiel weniger als 10 mm, von Bedeutung ist. Dies trifft insbesondere dann zu, wenn der Bohrerkopf zur Bildung von großen Nutenquerschnitten für abzutransportierendes Bohrmehl sehr schlank ausgebildet ist (siehe zum Beispiel DE 197 34 094 Figuren 4 und 7).

Bei mehrgängigen Förderwendeln erfolgt der Bohrmehltransport vom Bohrerkopf in die Förderwendelnuten durch entsprechende Einschnitte in den Bohrerkopf. Auch diese Einschnitte schwächend den Bohrerkopf bezüglich der Abstützung der verwendeten Hartmetall-Schneidplatten.

Aus der DE 197 53 731 A1 ist ein Gesteinsbohrwerkzeug bekannt geworden, beim welchem zur Verbesserung der Fördereigenschaften Haupt- und Nebenförderwendeln gebildet sind, so dass sich bei einer zum Beispiel zweigängigen Förderwendel durch den jeweils vorhandenen Nebenfördersteg eine Art viergängige Förderwendel ergibt. Aufgrund einer quer eingesetzten, dachförmigen Hartmetall-Schneidplatte ergeben sich jeweils zwei Hauptfördernuten, die durch die Nebenstege in mehrere Nebenfördernuten unterteilt sind. Bei einer Nebenförderwendel in einer Hauptfördernut werden demnach zwei Nebenfördernuten, das heißt bei einer zweigängigen Förderwendel insgesamt vier Nebenfördernuten gebildet (siehe zum Beispiel Figuren 1 und 2 der DE 197 53 731 A1).

Der Zugang zu jeder Nebenfördernut wird durch einen äußerst schlanken Bohrkopf erzielt, der durch einen geraden, achsparallelen Auslauf der spiralförmigen Förderwendel im Bereich des Bohrerkopfes erzielt wird.

Es sind auch schon Bohrwerkzeuge und insbesondere Gesteinsbohrer bekannt geworden, welche einen insgesamt aus Hartmetall bestehenden Bohrerkopf aufweisen, der mit angedeuteten Bohrmehlnuten versehen ist, die zu den einzelnen Bohrmehlnuten in der Förderwendel führen (DE 43 39 245 A1). Bei einem weiteren diesbezüglichen Werkzeug gemäß der DE 197 09 771 A1 wird zum Beispiel ein kreuzförmiger Hartmetall-Bohrkopf verwendet, der Haupt- und Nebenschneiden aufweist, wobei der Durchmesser über die Nebenschneiden etwas geringer als der Nenndurchmesser des Bohrers ist. Bei diesem Gesteinsbohrer kann der einstückige Bohrerkopf aus Hartmetall mit einer im Wesentlichen planen Anschlußfläche auf einen nicht näher dargestellten Bohrerkern mittels einer Löt- oder Schweißverbindung aufgebracht werden. Hierdurch werden vier Bohrmehlabfuhrnuten gebildet.

Schließlich zeigt die DE 197 07 115 A1 einen Gesteinsbohrer, bei welchem ein einstückig ausgebildeter sternförmiger Hartmetalleinsatz in entsprechende axial Längsnuten im Bohrerkopf eingebettet ist. Die Verwendung von nur drei Schneiden im Ausführungsbeispiel dieser Druckschrift ermöglicht drei Abfuhrnuten, jedoch mit einer entsprechenden Schwächung des Bohrerkopfes bei der abstützenden Einbettung des Hartmetalleinsatzes.

### Aufgabe und Vorteile der Erfindung:

Der Erfindung liegt die Aufgabe zugrunde, einen optimierten Gesteinsbohrer herzustellen, der insbesondere eine hohe Standfestigkeit bei geringen Reibungsverlusten und optimalen Fördereigenschaften aufweist.

Diese Aufgabe wird ausgehend von einem Gesteinsbohrer nach dem Oberbegriff des Anspruchs 1 durch die kennzeichnenden Merkmale des Anspruchs 1 gelöst.

In den Unteransprüchen sind vorteilhafte und zweckmäßige Weiterbildungen des erfindungsgemäßen Gesteinsbohrers angegeben.

Der Erfindung liegt die Erkenntnis zugrunde, dass optimale Bohreigenschaften nur dann erzielbar sind, wenn Förderwendel und Bohrerkopf erfindungsspezifisch aufeinander angepaßt sind. Hierfür muß die Förderwendel gute Fördereigenschaften aufweisen, was durch ein großes Fördervolumen der Fördernuten erreicht wird. Ein hohes Fördervolumen der Abfuhrnuten hat jedoch im Allgemeinen einen geringe Kernquerschnitt zur Folge, der zu einer Schwächung des Bohrwerkzeugs insbesondere im Bereich des Bohrerkopfes führt. Dies gilt insbesondere dann, wenn der Bohrerkopf einen oder mehrere Längsschlitze aufweist, zur Aufnahme von Hartmetall-Schneidplatten.

Zur Erzielung optimaler Fördereigenschaften verwendet die vorliegende Erfindung ein Gesteinsbohrwerkzeug, wie es aus der DE 197 53 731 A1 des Anmelders bekannt ist. Wie zuvor schon beschrieben, wird bei einem solchen Bohrwerkzeug eine hohe Förderleistung mittels eines großen Fördervolumens in großen Bohrmehlnuten gebildet, in denen jedoch Nebenförderwendeln zur Unterstützung der Bohrmehlförderung und Verstärkung des Bohrerschafts eingebracht sind. Die Förderwendel besteht demzufolge aus Haupt- und Nebenförderwendeln, die optimale Fördereigenschaften aufweisen.

Um ein solches Bohrwerkzeug auch im Bohrerkopf zu optimieren, wird ein einstückiger Hartmetall-Bohrerkopf beziehungsweise Hartmetall-Aufsatz aufgebracht, dessen Geometrie hinsichtlich den Hauptschneiden und Nebenschneiden derart ausgebildet ist, dass sich ein weitestgehend fließender Übergang an die Querschnittsgeometrien der Haupt- und Nebenstege der Bohrerförderwendel im Übergangsbereich zum Bohrerkopf einstellt. Hierdurch tritt keine Schwächung des Bohrerkopfes durch einzubringende Längsschlitze für die Haupt- und/oder Nebenschneidplatten auf, so dass neben einem stabilen Bohrerkopf auch optimale Fördereigenschaften gewährleistet sind.

Besonders vorteilhaft ist die Weiterbildung der Erfindung dahingehend, dass alternativ zu einem kreuzförmigen auch ein X-förmiger Hartmetallaufsatz eingesetzt werden kann, und zwar je nach geometrischer Anpassung der Haupt- und Nebenschneiden des Bohrerkopfes an die Haupt- und Nebenstege der Förderwendel. Der Übergang der Bohrmehlnuten von der Förderwendel in den Bohrerkopf erfolgt damit nahezu ohne jegliche Behinderung, dass heißt der Abtransport des Bohrmehls vom Bohrerkopf in die Förderwendel geschieht ohne den Bohrmehlfluß störende Einengungen im Bereich des Bohrerkopfes. Zusätzlich ist ein hohes Maß an Führungseigenschaften des Bohrerkopfes insbesondere beim Anbohrvorgang gewährleistet.

Vorteilhaft ist es weiterhin, dass der Bohrerkopf einen Hartmetallaufsatz mit einer zusätzlichen Zentrierspitze aufweist. Hierdurch kann der Anbohrvorgang verbessert werden. Es können auch eine oder mehrere Zentrierschneiden vorgesehen sein.

In bevorzugter Ausführung wird die Förderwendel des Gesteinsbohrers zweigängig ausgebildet, mit jeweils zwei spiralförmig umlaufenden Hauptstegen und zwei jeweils dazwischen liegenden Nebenstegen. Hierdurch kann ein kreuzförmiger Hartmetallaufsatz oder auch ein X-förmiger Hartmetallaufsatz zur Bildung von Hauptfördernuten und Nebenfördernuten verwendet werden.

Eine Weiterbildung der Erfindung liegt darin, dass die Nebenschneiden des Hartmetallaufsatzes in ihrem Außendurchmesser möglichst gleich oder nur geringfügig größer als der Außendurchmesser der Nebenförderwendel beziehungsweise Nebenstege der Förderwendel bemessen sind, während der Außendurchmesser der Hartmetall-Hauptschneide des Hartmetallaufsatzes, der den Nenndurchmesser des Bohrwerkzeugs bildet, an den Außendurchmesser der Hauptstege der Förderwendel angepaßt ist. Dabei beträgt der Außendurchmesser der Nebenstege und damit der Nebenschneiden etwa das 0,5 bis 0,9-fache und vorzugsweise das 0,7 bis 0,8-fache des Außendurchmessers der Hauptstege beziehungsweise der Hauptschneide.

Vorteilhaft ist es weiterhin, wenn die Rückenbreiten der Hauptstege etwa die gleiche Breite aufweisen, wie die Dicke der Hauptschneide des Hartmetallaufsatzes.

Erfindungsgemäß ist es vorgesehen, dass die Förderkanten der Haupt- und/oder Nebenstege zur Ausbildung von Bohrmehltragflächen vorzugsweise einen etwa rechtwinkligen Verlauf zur Bohrerlängsachse aufweisen.

In einer vorteilhaften Weiterbildung der Erfindung ist der Nebensteg der Nebenförderwendel mit ein spitz zulaufenden Rücken ausgebildet, der jeweils zur Förderseite der Nebenschneide des Hartmetallaufsatzes führt. Es können auch andere Querschnittsformen für die Nebenförderwendel verwendet werden. Hierzu wird insbesondere auf die DE 197 53 731 A1 verwiesen.

Weitere Einzelheiten und Vorteile ergeben sich aus der Beschreibung des nachfolgenden Ausführungsbeispiels.

Es zeigen
- Fig. 1: eine Seitenansicht auf ein erfindungsgemäßes Bohrwerkzeug und
- Fig. 2: eine Draufsicht auf das Bohrwerkzeug in vergrößerter Darstellung.

### Beschreibung des Ausführungsbeispiels

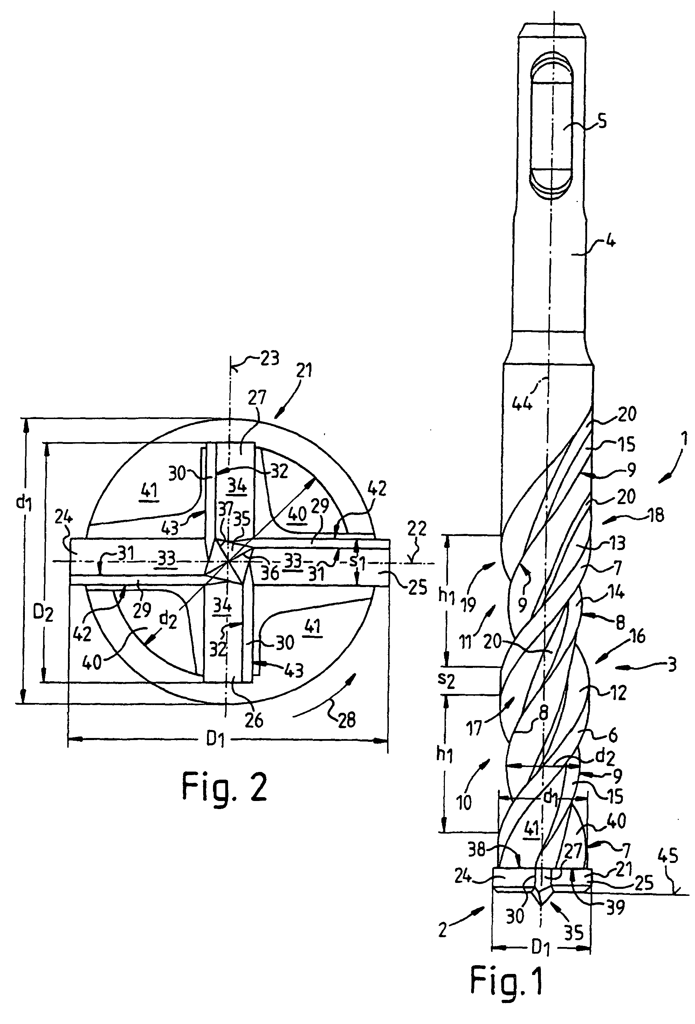

Der in der Figur 1 in Seitenansicht dargestellte Gesteinsbohrer 1 besteht aus einem Bohrerkopf 2, einem sich daran anschließenden Wendelschaft mit zweigängiger spiralförmiger Förderwendel 3 und einem sich daran anschließenden Einspannschaft 4 zum Einsetzen in eine Antriebsmaschine. Der Einspannschaft 4 weist Aufnahmemittel 5 zum Einsatz in eine Hammerbohrmaschine (SDS-Plus-Schaft) auf.

Der Wendelschaft beziehungsweise die Förderwendel 3 ist in ihrem Aufbau prinzipiell gleich ausgebildet, wie dies in der Druckschrift DE 197 53 731 A1 des Anmelders und insbesondere in den dortigen Figuren 1 und 2 beschrieben ist. Hierauf wird hiermit ausdrücklich Bezug genommen. Dabei ist im vorliegenden Ausführungsbeispiel die Förderwendel 3 als zweigängige Förderwendel ausgebildet, wobei zwischen zwei spiralförmig umlaufenden Hauptstegen 6, 7 jeweils eine Haupt-Abfuhrnut 10, 11 über einen Höhenabschnitt h₁ gebildet sind. Diese Höhenabschnitte h₁ sind nur symbolisch in Figur 1 dargestellt, um den Bereich dieser Haupt-Abfuhrnuten 10, 11 darzustellen. Die Hauptstege 6, 7 der Förderwendel 3 weisen einen Außendurchmesser d₁ auf und weisen weiterhin zum Beispiel einen rechteckförmigen oder halbtrapezförmigen Querschnitt mit senkrecht zur Bohrerlängsachse 44 liegenden Förderkante 12, 13 auf.

Innerhalb jeder Haupt-Abfuhrnut 10, 11 mit den sie begrenzenden Hauptstegen 6, 7 befindet sich jeweils ein umlaufender Nebensteg 8, 9 mit einem kleineren Außendurchmesser d₂. Der Nebensteg 8, 9 ist als Vorsprung gegenüber der Haupt-Abfuhrnut 10, 11 ausgebildet. Der Hauptsteg 6 bildet demnach eine seitliche, etwa radial verlaufende Förderkante 12 für zu förderndes Bohrmehl, der Hauptsteg 7 eine entsprechende Förderkante 13 für entsprechendes Bohrmehl. Gleichermaßen besitzt der Nebensteg 8 eine Förderkante 14 für Bohrmehl und der Nebensteg 9 eine entsprechende Förderkante 15 für entsprechendes Bohrklein. Hieraus folgt, dass die Haupt-Abfuhrnut 10 in zwei Abfuhrnuten 16, 17 mit den Förderkanten 12, 14 und die weitere Haupt-Abfuhrnut 11 in zwei weitere Abfuhrnuten 18, 19 mit den Förderkanten 13, 15 aufgeteilt ist. Es handelt sich demnach um eine zweigängige Förderwendel 3 mit den Hauptstegen 6, 7 mit jeweils in die Bohrmehlabfuhrnut eingebetteten Nebenfördersteg 8, 9. Die Förderwendel 3 weist neben den weitestgehend radial verlaufenden Förderkanten 12-15 achsparallele Abschnitte im Nutengrund auf, die mit Bezugszeichen 20 angedeutet sind.

Die Stegbreite der Hauptstege 6, 7 beträgt s₁ (siehe Figur 2), die Nebenstege 8, 9 sind derart ausgebildet, dass sie an ihrem Außenumfang nahezu spitz zulaufen. Das Durchmesserverhältnis d₁ zu d₂ beträgt ungefähr d₂ ≈ 0,7 bis 0,9 * d₁.

Im Übrigen wird zur Erläuterung des Aufbaus des Wendelschaftes 3 ausdrücklich auf die D 197 53 731 A1 verwiesen. Eine solche Wendel ist zum Beispiel im spanabhebenden Verfahren hergestellt.

Der Gesteinsbohrer nach Figur 1 weist einen einstückigen Hartmetall-Aufsatz 21 auf, wie er in der Figur 1 in Seitenansicht sowie in der Figur 2 in Draufsicht auf das Bohrwerkzeug gezeigt ist.

Der Hartmetall-Aufsatz 21 (HM-Aufsatz) ist als Hartmetallkreuz ausgebildet, das heißt die vertikale Längssymmetrieebenen 22, 23 stehen senkrecht aufeinander. Das Hartmetall-Kreuz 21 weist zwei auf der vertikalen Längsebene 22 liegenden Hauptschneiden 24, 25 und zwei auf der vertikalen Längssymmetrieebene 23 liegende Nebenschneiden 26, 27 auf. Haupt- und Nebenschneiden 24 bis 27 besitzen vordere Spanflächen 29 beziehungsweise 30 die in Drehrichtung (Pfeil 28 des Bohrwerkzeugs weisen). Hinter der jeweiligen Schneidkante 31, 32 befinden sich Freiflächenabschnitte 33, 34.

Ein Nenndurchmesser D₁ wird durch die in Figur 2 in Draufsicht dargestellte Länge der beiden Hauptschneiden 24, 25 gebildet. Ein Durchmesser D₂ der beiden Nebenschneiden 26, 27 ergibt sich aus der Darstellung in Figur 2 in ihrer Längenerstreckung.

Der Durchmesser D₁ der Hauptschneiden 24, 25 ist geringfügig größer als der Außendurchmesser d₁ der Hauptstege 6, 7. Gleichermaßen ist der Durchmesser D₂ gleich groß oder nur geringfügig größer als der Außendurchmesser d₂ Nebenstege 8, 9. Dabei kann das Verhältnis von D₂ zu D₁ etwa einen Betrag aufweisen von D₂ ≈ 0,7 bis 0,9 * D₁.

Das Hartmetall-Kreuz 21 weist in seinem Zentrum eine zusätzliche, pyramidenförmige Zentrierspitze 35 auf. Wie aus Figur 2 ersichtlich, verbindet dabei die erste Symmetrieebene 36, die Schneidkanten 31 der beiden Hauptschneiden 24, 25 und die zweite Symmetrieebene 37, die beiden Schneidkanten 32 der beiden Nebenschneiden 26, 27.

Der Hartmetall-Aufsatz 21 wird mittels eines geeigneten Fügeverfahrens wie zum Beispiel eines Widerstands-Schweißverfahrens, Diffusionsschweißverfahrens oder Lötverfahrens mit seiner planen unteren Fläche 38 auf eine entsprechend vorbereitete obere plane Fläche 39 des Wendelschaftes 3 stumpf aufgeschweißt, wobei die Hauptschneide 24 mit dem Hauptsteg 6 und die Hauptschneide 25 mit dem Hauptsteg 7 fluchtet. Hierfür ist die Stärke oder Dicke s₁ der Hauptschneiden 24, 25 etwa gleich ausgebildet wie die Rückenbreite s₂ der Hauptstege 6, 7. Seitlich vordere Flanken 42 der Hauptschneiden 24, 25 gehen in die Förderkanten 12, 13 der Förderwendel über. Gleichermaßen fluchten vordere Flanken 43 der beiden Nebenschneiden 26, 27 mit den Förderkanten 14, 15 der Nebenstege 8, 9.

Der HM-Aufsatz 21 kann an seiner Verbindungsfläche 38 zusätzliche Zentriermittel oder Befestigungsmittel wie Dorne oder Stege oder dergleichen aufweisen.

Durch die Erfindung ist gewährleistet, dass das durch die Spanflächen 29, 30 des Hartmetall-Aufsatzes 21 abgetragene Material unmittelbar in die davor liegende Abfuhrnut 40, 41 gelangt. Aufgrund des stumpf aufgeschweißten Hartmetall-Aufsatzes 21 ergeben sich damit äußerst große Bohrmehl-Abfuhrnuten vor den jeweiligen Schneidkanten 31, 32 der Haupt- und Nebenschneiden 24, 25 beziehungsweise 26, 27. Hierdurch ergeben sich optimale Fördereigenschaften.

Wie aus Figur 1 und 2 beispielhaft hervorgeht sind die Schneidkanten 31, 32 in einer Ebene 45 angeordnet, auf der eine Bohrerlängsachse 44 senkrecht steht.

Die Erfindung ist nicht auf das dargestellte und beschriebene Ausführungsbeispiel beschränkt. Sie umfaßt auch vielmehr alle Abwandlungen und Weiterbildungen im Rahmen der Schutzrechtsansprüche. Beispielsweise kann der Hartmetall-Aufsatz statt kreuzförmig auch X-förmig ausgebildet sein, wobei vorzugsweise ein stumpfer Winkel zwischen der voreilenden Hauptschneide 24, 25 der nacheilenden Nebenschneide 26, 27 eingestellt wird. Weiterhin kann auch das Durchmesserverhältnis der Durchmesser d₁ zu d₂ von Haupt- und Nebensteg variieren.

### Bezugszeichenliste:

- 1: Gesteinsbohrer
- 2: Bohrerkopf
- 3: Wendelschaft mit 2-gängier Förderwendel
- 4: Einspannschaft
- 5: Aufnahmemittel
- 6: Hauptsteg
- 7: Hauptsteg
- 8: Nebensteg
- 9: Nebensteg
- 10: Haupt-Abfuhrnut
- 11: Haupt-Abfuhrnut
- 12: Förderkante
- 13: Förderkante
- 14: Förderkante
- 15: Förderkante
- 16: Abfuhrnut
- 17: Abfuhrnut
- 18: Abfuhrnut
- 19: Abfuhrnut
- 20: achsparallele Abschnitte
- 21: Hartmetall-Aufsatz
- 22, 23: Längssymmetrieebene
- 24, 25: Hauptschneide
- 26, 27: Nebenschneide
- 29, 30: vordere Spanfläche
- 31, 32: Schneidkante
- 33, 34: Freiflächenabschnitt
- 35: Zentrierspitze
- 36, 37: Symmetrieebene
- 38: Fläche
- 39: Fläche
- 40, 41: Abfuhrnut
- 42, 43: Flanke
- 44: Bohrerlängsachse
- 45: Ebene

## Patentansprüche

1. Gesteinsbohrer für handgeführte Hammer-, Schlag- und Drehbohrmaschinen, mit einem Bohrerkopf (2) und einer sich hieran anschließenden ein- oder mehrgängigen spiralförmigen Förderwendel (3), wobei die Förderwendel (3) spiralförmig umlaufende Hauptstege (6, 7) mit Außendurchmesser dl und ebenfalls spiralförmig umlaufende Nebenstege (8, 9) mit geringerem Außendurchmesser d₂ aufweist, wobei die Haupt- und Nebenstege Förderkanten (12 bis 15) in Abfuhrnuten (16 bis 19) zum Bohrmehltransport aufweisen, **dadurch gekennzeichnet, dass** der Bohrerkopf (2) aus einem einstückigen Hartmetall-Aufsatz (21) gebildet ist, der mittels einer Schweiß- oder Lötverbindung oder dergleichen mit der Förderwendel (3) derart verbunden ist, dass jeweils die Hauptstege (6, 7) an die Hauptschneiden (24, 25) und die Nebenstege (8, 9) an die Nebenschneiden (26, 27) gefügt sind, wobei die Geometrie hinsichtlich den Hauptschneiden und Nebenschneiden derart ausgebildet ist, dass sich ein weitestgehend fließender Übergang an die Querschnittsgeometrien der Haupt- und Nebenstege der Bohrerförderwendel im Übergangsbereich zum Bohrerkopf einstellt, und dass der durch die Längserstreckung der Hauptschneiden (24, 25) gebildete Außendurchmesser D₁ gleich oder geringfügig größer ist als der Außendurchmesser d₁ der Hauptstege (6, 7) und dass der durch die Längserstreckung der Nebenschneiden (26, 27) gebildete Außendurchmesser D₂ gegenüber dem Außendurchmesser D₁ der Hauptschneiden (24, 25) zurückgesetzt ist.

2. Gesteinsbohrer nach Anspruch 1, **dadurch gekennzeichnet, dass** die Bohrmehl-Förderkante (12 bis 15) der Haupt- und Nebenfördernuten (16 bis 19) in seitliche vordere Flanken (42, 43) von Haupt- und Nebenschneiden (24 bis 27) des Hartmetall-Aufsatzes (21) auslaufen.

3. Gesteinsbohrer nach Anspruch 1 oder 2, **dadurch gekennzeichnet, dass** die Außendurchmesser D₁, D₂ der Haupt- und Nebenschneiden (24 bis 27) des Hartmetall-Aufsatzes (21) gleich groß oder geringfügig größer sind als die unterschiedlichen Außendurchmesser d₁, d₂ der Haupt- und Nebenstege (6 bis 9).

4. Gesteinsbohrer nach einem der vorhergehenden Ansprüche, **dadurch gekennzeichnet, dass** die Haupt- und Nebenschneiden (24 bis 27) des Hartmetall-Aufsatzes (21) in Draufsicht kreuzförmig oder X-förmig ausgebildet sind.

5. Gesteinsbohrer nach einem der vorhergehenden Ansprüche, **dadurch gekennzeichnet, dass** der Hartmetall-Aufsatz (21) eine Zentrierspitze (35) oder wenigstens eine oder mehrere Zentrierschneiden aufweist.

6. Gesteinsbohrer nach einem der vorhergehenden Ansprüche, **dadurch gekennzeichnet, dass** die Förderwendel (3) zweigängig ausgebildet ist, mit zwei spiralförmig umlaufenden Hauptstegen (6, 7) und zwei jeweils dazwischen liegenden Nebenstegen (8, 9).

7. Gesteinsbohrer nach einem der vorhergehenden Ansprüche, **dadurch gekennzeichnet, dass** der den Nenndurchmesser D₁ bildende Außendurchmesser der Hartmetall-Hauptschneiden (24, 25) größer ist als der Außendurchmesser D₂ der Nebenschneiden (26, 27) wobei D₂ ≈ 0,5 bis 0,9 * D₁ und insbesondere 0,7 bis 0,8 * D₁ beträgt.

8. Gesteinsbohrer nach einem der vorhergehenden Ansprüche, **dadurch gekennzeichnet, dass** die Dicke oder Stärke s₁ der Hauptschneide (24, 25) annähernd gleich breit, geringfügig breiter oder etwas schmäler ist als die Rückenbreite s₂ der Hauptstege (6, 7).

9. Gesteinsbohrer nach einem der vorhergehenden Ansprüche, **dadurch gekennzeichnet, dass** der Nebensteg (8, 9) einen spitz zulaufenden Rücken aufweist.

10. Gesteinsbohrer nach einem der vorhergehenden Ansprüche, **dadurch gekennzeichnet, dass** der Nebensteg (8, 9) als eine im Querschnitt rechteckförmige, trapezförmige, halbtrapezförmige, dreieckförmige, ballige, halbkreisförmige Erhebung gegenüber dem Nutengrund ausgebildet ist, wobei vorzugsweise der Rücken des Nebensteges (8, 9) spitz, flach oder rund zulaufend ausgebildet ist.

11. Gesteinsbohrer nach einem der vorhergehenden Ansprüche, **dadurch gekennzeichnet, dass** zur Bildung von Bohrmehltragflächen die Förderkanten (12 bis 15) der Hauptstege (6, 7) und/oder der Nebenstege (8, 9) einen etwa rechtwinkligen Verlauf zur Bohrerlängsachse (44) aufweisen.

12. Gesteinsbohrer nach einem der vorhergehenden Ansprüche, **dadurch gekennzeichnet, dass** der Hartmetall-Aufsatz (21) eine weitestgehend plane Anschlußfläche (38) aufweist, die insbesondere zusätzliche Zentrier- und/oder Positionierungshilfen aufweist.

13. Gesteinsbohrer nach einem der vorhergehenden Ansprüche, **dadurch gekennzeichnet, dass** die Schneidkanten (31, 32) der Haupt- und Nebenschneiden (24 bis 27) in einer senkrecht zur Bohrerlängsachse (44) liegenden Ebene (45) angeordnet sind.

## Claims

1. Rock drill for hand-guided rotary hammers, percussion drilling machines and rotary drilling machines, having a drill head (2) and a single- or multi-start conveying helix (3) adjoining this drill head (2), the conveying helix (3) having helically encircling main webs (6, 7) with an outside diameter d₁ and likewise helically encircling secondary webs (8, 9) with a smaller outside diameter d₂, the main and secondary webs having conveying edges (12 to 15) in disposal flutes (16 to 19) for transporting drillings, **characterized in that** the drill head (2) is formed from a one-piece carbide crown (21) which is connected to the conveying helix (3) by means of a welded or brazed joint or the like in such a way that in each case the main webs (6, 7) are joined to the main lips (24, 25) and the secondary webs (8, 9) are joined to the secondary lips (26, 27), the geometry with regard to the main lips and secondary lips being designed in such a way that, to a very large extent, a smooth transition is produced at the cross-sectional geometries of the main and secondary webs of the drill conveying helix in the transition region to the drill head, and **in that** the outside diameter D₁ formed by the longitudinal extent of the main lips (24, 25) is equal to or slightly larger than the outside diameter d₁ of the main webs (6, 7), and **in that** the outside diameter D₂ formed by the longitudinal extent of the secondary lips (26, 27) is set back relative to the outside diameter D₁ of the main lips (24, 25).

2. Rock drill according to Claim 1, **characterized in that** the drillings conveying edges (12 to 15) of the main and secondary conveying flutes (16 to 19) run out into lateral front flanks (42, 43) of main and secondary lips (24 to 27) of the carbide crown (21).

3. Rock drill according to Claim 1 or 2, **characterized in that** the outside diameters D₁, D₂ of the main and secondary lips (24 to 27) of the carbide crown (21) are the same size as or slightly larger than the different outside diameters d₁, d₂ of the main and secondary webs (6 to 9).

4. Rock drill according to one of the preceding claims, **characterized in that** the main and secondary lips (24 to 27) of the carbide crown (21) are designed in a cross shape or X shape in plan view.

5. Rock drill according to one of the preceding claims, **characterized in that** the carbide crown (21) has a centring point (35) or at least one or more centring lips.

6. Rock drill according to one of the preceding claims, **characterized in that** the conveying helix (3) is of two-start design, having two helically encircling main webs (6, 7) and two secondary webs (8, 9) lying in between in each case.

7. Rock drill according to one of the preceding claims, **characterized in that** the outside diameter of the main carbide lips (24, 25), which forms the nominal diameter D₁, is greater than the outside diameter D₂ of the secondary lips (26, 27), where D₂ ≈ 0.5 to 0.9 × D₁ and in particular 0.7 to 0.8 × D₁.

8. Rock drill according to one of the preceding claims, **characterized in that** the thickness s₁ of the main lip (24, 25) is approximately the same width as, slightly wider than or slightly narrower than the land width s₂ of the main webs (6, 7).

9. Rock drill according to one of the preceding claims, **characterized in that** the secondary web (8, 9) has a land tapering to a point.

10. Rock drill according to one of the preceding claims, **characterized in that** the secondary web (8, 9) is designed as a prominence relative to the flute root, this prominence being rectangular, trapezoidal, semi-trapezoidal, triangular, crowned, hemispherical in cross section, the land of the secondary web (8, 9) preferably being designed so as to taper to a point or to a flat or round end.

11. Rock drill according to one of the preceding claims, **characterized in that**, to form bearing surfaces for drillings, the conveying edges (12 to 15) of the main webs (6, 7) and/or of the secondary webs (8, 9) run approximately at right angles to the drill longitudinal axis (44).

12. Rock drill according to one of the preceding claims, **characterized in that** the carbide crown (21) has a connecting surface (38) which to a very large extent is flat and has in particular additional centring and/or positioning aids.

13. Rock drill according to one of the preceding claims, **characterized in that** the cutting edges (31, 32) of the main and secondary lips (24 to 27) are arranged in a plane (45) lying perpendicularly to the drill longitudinal axis (44).

## Revendications

1. Foret à béton pour un perforateur à main à percussion, frappe et rotation, comportant une tête de foret (2) suivie d'une spire de transfert (3) hélicoïdale à un ou plusieurs filets,
la spire de transfert (3) ayant des filets principaux, tournant en hélice (6, 7) de diamètre extérieur di ainsi que des filets auxiliaires (8, 9) tournant également en hélice, de diamètre extérieur d₂ plus faible,
les filets principaux et auxiliaires ayant des arêtes de transfert (12-15) dans des rainures d'évacuation (16-19) pour évacuer la farine de perçage,
**caractérisé en ce que**
la tête de foret (2) est constituée par un chapeau en métal dur (21) en une seule pièce, fixé par soudage ou brasage ou moyen analogue à l'hélice de transfert (3) de façon que chaque fois les filets principaux (6, 7) rejoignent les arêtes principales (24, 25) et que les filets auxiliaires (8, 9) rejoignent les arêtes auxiliaires (26, 27),
la géométrie des arêtes principales et des arêtes auxiliaires étant réalisée pour avoir une transition pratiquement continue à la géométrie de la section des filets principaux et auxiliaires de l'hélice de transfert du foret dans la zone transitoire vers la tête de foret, et
le diamètre extérieur (D₁) de l'extension longitudinale des arêtes principales (24, 25) est égal ou légèrement supérieur au diamètre extérieur d₁ des filets principaux (6, 7) et le diamètre extérieur D₂ de l'extension longitudinale des arêtes auxiliaires (26, 27) est en retrait par rapport au diamètre extérieur D₁ des arêtes principales (24, 25).

2. Foret à béton selon la revendication 1,
**caractérisé en ce que**
l'arête de transfert de farine de perçage (12-15) des rainures principales et auxiliaires de transfert (16-19) se termine au niveau des flancs avant latéraux (42, 43) des arêtes principales et auxiliaires (24-27) de la pastille en métal dur (21).

3. Foret à béton selon la revendication 1 ou 2,
**caractérisé en ce que**
les diamètres extérieurs D₁, D₂ des arêtes principales et des arêtes auxiliaires (24-27) du chapeau en métal dur (21) sont égaux ou légèrement supérieurs aux diamètres extérieures différents (d₁, d₂) des filets principaux et auxiliaires (6-9).

4. Foret à béton selon l'une des revendications précédentes,
**caractérisé en ce que**
les arêtes principales et auxiliaires (24-27) du chapeau en métal dur (21) sont en vue de dessus en forme de croix ou de X.

5. Foret à béton selon l'une quelconque des revendications précédentes,
**caractérisé en ce que**
la pastille en métal dur (21) comporte une pointe de centrage (35) ou au moins une ou plusieurs arêtes de centrage.

6. Foret à béton selon l'une quelconque des revendications précédentes,
**caractérisé en ce que**
l'hélice de transfert (3) est à deux filets comportant deux filets principaux (6, 7) hélicoïdaux et deux filets auxiliaires (8, 9) intermédiaires.

7. Foret à béton selon l'une quelconque des revendications précédentes,
**caractérisé en ce que**
le diamètre extérieur des arêtes principales en métal dur (24, 25) donnant le diamètre nominal D₁ est supérieur au diamètre extérieur D₂ des arêtes auxiliaires (26, 27) avec D₂ ∼ 0,5 jusqu'à 0,9 * D₁ et en particulier 0,7 jusqu'à 0,8 * D₁.

8. Foret à béton selon l'une quelconque des revendications précédentes,
**caractérisé en ce que**
l'épaisseur S₁ de l'arête principale (24, 25) est sensiblement égale, légèrement supérieure ou légèrement inférieure à la largeur arrière S₂ du filet principal (6, 7).

9. Foret à béton selon l'une quelconque des revendications précédentes,
**caractérisé en ce que**
le filet auxiliaire (8, 9) comporte un dos avec un retour en pointe.

10. Foret à béton selon l'une quelconque des revendications précédentes,
**caractérisé en ce que**
le filet auxiliaire (8, 9) est réalisé sous la forme d'un bossage de section rectangulaire, trapézoïdale, semi-trapézoïdale, triangulaire, bombée, semi-circulaire, par rapport au fond de la rainure et de préférence le dos du filet auxiliaire (8, 9) est en pointe, plat ou arrondi.

11. Foret à béton selon l'une quelconque des revendications précédentes,
**caractérisé en ce que**
pour former des surfaces de supports de farine de perçages, les arêtes de transfert (12-15) des filets principaux (6, 7) et/ou des filets auxiliaires (8, 9) ont un tracé sensiblement à l'équerre par rapport à l'axe longitudinal (44) du foret.

12. Foret à béton selon l'une quelconque des revendications précédentes,
**caractérisé en ce que**
la pastille (21) en métal dur présente une surface de raccordement (38) essentiellement plane, ayant notamment des aides de positionnement et de centrage, supplémentaires.

13. Foret à béton selon l'une quelconque des revendications précédentes,
**caractérisé en ce que**
les arêtes de coupe (31, 32) des arêtes principales et auxiliaires (24-27) sont prévues dans un plan (45) perpendiculaire à l'axe longitudinal (44) du foret.
